# DEMANDE DE BREVET EUROPEEN

(11) **EP 1 895 681 A1**
(43) Date de publication de la demande: **05.03.2008**
(21) Numéro de dépôt: 06291394.2
(22) Date de dépôt: 04.09.2006
(51) Int. Cl.: H04B 7/26

(54) **Système de transmission de données sans fil entre une station de base et une station de relais dans un réseau de téléphonie mobile**

(71) Demandeur: E-Blink, 91800 Boussy Saint Antoine (FR)
(72) Inventeur: Rolland, Alain, 91480 Quincy Sous Senart (FR); Blanc, Stéphane, 91650 Breuillet (FR); Plumecoq, Jean-Christophe, 91120 Palaiseau (FR)
(74) Mandataire: Berger, Helmut

(57) **Abrégé**

L'invention concerne un système de transmission de données sans fil entre une station de base et une antenne-relais d'un réseau de téléphonie mobile. Le système est caractérisé en ce qu'une liaison (17) comporte pour la séparation des canaux deux filtres (20, 22) ayant une isolation inférieure à l'isolation prédéterminée totale et en ce que les antennes (15) sont des antennes à double polarisation, chaque polarisation étant attribuée à un des deux canaux et en ce que l'isolation fournie par les filtres (20, 22) et l'antenne (15) s'additionnent pour l'obtention de l'isolation prédéterminée totale.

L'invention est utilisable pour des systèmes de réseau de téléphonie mobile.

## Description

L'invention concerne un système de transmission de données sans fil entre une station de base et une antenne relais d'un réseau de téléphonie mobile, du type comprenant au moins une liaison bidirectionnelle, qui comporte au moins une voie pourvue d'un canal d'émission et d'un canal de réception de signaux électriques et des moyens d'isolation fréquentielle des canaux, à l'antenne relais et à la station de base étant associé respectivement un dispositif électronique pourvu d'une antenne.

Dans des systèmes de communication bidirectionnelle de ce type, l'isolation fréquentielle doit être de l'ordre de 90 dB. Pour satisfaire à cette exigence, il est connu d'utiliser des duplexeurs à cavité métallique. Ces duplexeurs avantageux à cause de leur grande isolation entre les canaux présentent des inconvénients majeurs d'avoir un poids et un volume très importants.

L'invention a pour but de pallier ces inconvénients.

Pour atteindre ce but, le système de communication bidirectionnelle selon l'invention est caractérisé en ce qu'une liaison précitée comporte pour la séparation des canaux d'une voie deux filtres ayant une isolation inférieure à l'isolation prédéterminée totale et en ce que les antennes sont des antennes à double polarisation, chacune pour un canal, et en ce que les isolations fournies par le filtre et l'antenne s'additionnent pour l'obtention de l'isolation prédéterminée totale.

D'autres caractéristiques de l'invention sont indiquées dans la revendication dépendante.

L'invention sera mieux comprise, et d'autres buts, caractéristiques, détails et avantages de celle-ci apparaîtront plus clairement dans la description explicative qui va suivre faite en référence aux dessins schématiques annexés donnés uniquement à titre d'exemple illustrant plusieurs modes de réalisation de l'invention et dans lesquels :
- la figure 1 est une vue schématique illustrant un système de transmission sans fil entre une station de base selon l'invention et une antenne de relais d'un réseau de téléphonie mobile selon l'invention ;
- la figure 2 est une vue schématique d'une station de base comportant une baie de radio-communication et trois antennes reliées chacune à la baie par une liaison d'opération bidirectionnelle de l'opérateur ;
- la figure 3 est une représentation schématique d'un dispositif de filtre selon l'invention ;
- la figure 4 est une vue schématique d'un dispositif de filtre selon l'invention pour une liaison bidirectionnelle comportant des voies principale et diversité, et
- la figure 5 est une vue schématique d'une application du système selon l'invention.

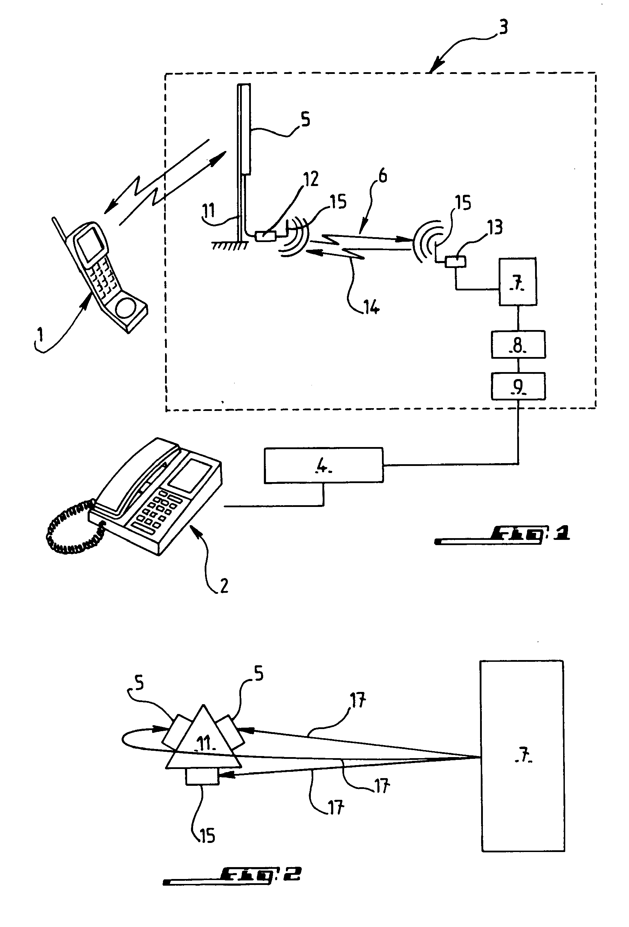

La figure 1 illustre un système de communication entre un téléphone mobile 1 et un téléphone fixe 2 par l'intermédiaire d'un réseau de téléphonie mobile 3 et d'un réseau fixe 4. A l'intérieur du réseau de téléphonie mobile 3, la communication passe par une antenne-relais 5 destinée à communiquer avec le téléphone mobile 1, une liaison de transmission de données 6 sans fil et une baie de radio-communication 7 appelée généralement BTS (Base Transceiver System) d'une station de base fixe qui comporte en outre une station de contrôle de base 8 appelée communément BSC (Base Station Controller) et un centre de communication 9 appelé MSC (Mobile Switching Center) .

L'antenne-relais 5 est supportée par un mât 11 monté par exemple sur la terrasse d'un immeuble. La liaison entre l'antenne 5 et la baie de radio-communication 7 est réalisée sous forme d'une liaison par fréquence radio. La transmission sans fil a lieu plus précisément entre un dispositif d'équipement électronique prévu au pied du mât 11 de l'antenne, enfermé dans un boîtier 12 et un dispositif d'équipement électronique enfermé dans un boîtier 13 associé à la baie de communication 7. Les boîtiers d'antenne 12 et de baie 13 sont équipés de moyens d'antenne émetteur et récepteur 15 des signaux à transmettre.

Un tel système de communication est décrit dans la demande de brevet internationale WO 2005/051017.

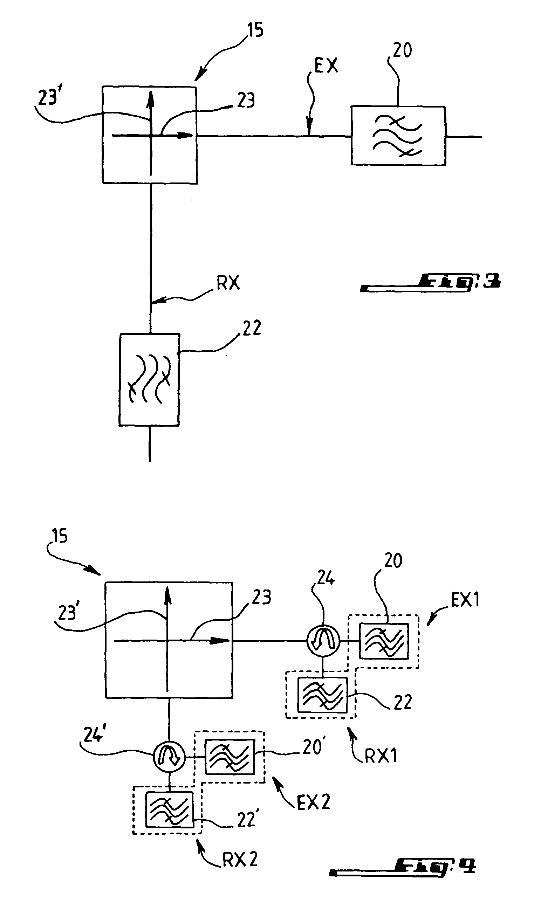

Une liaison entre l'antenne 5 et le dispositif BTS 7 est une liaison bidirectionnelle qui comporte au moins une voie, mais généralement deux voies, à savoir une voie principale et une voie diversité. La figure 2 montre une station de base dans laquelle le dispositif BTS 7 est relié à trois antennes 5 placées sur un pylône 11, chaque fois par une liaison bidirectionnelle susmentionnée à deux voies, notée 17. Les trois antennes pourraient appartenir à un opérateur. Les antennes pourraient être des antennes multifréquences par exemple pour la transmission de deux à quatre bandes de fréquence. Le nombre de signaux transitant sur ce site de la station de base est alors multiplié par le nombre de bandes de fréquence. Il est possible qu'un second opérateur utilisant lui aussi plusieurs bandes de fréquence s'installe sur le même site. Dans ce cas, le pylône 11 portera trois autres antennes 5 et le nombre de signaux transitant sur ce site serait augmenté en conséquence.

Il est connu que, dans un système de communication bidirectionnelle, d'émission et de réception, comportant une seule antenne 15, pour séparer les canaux d'émission EX et réception RX d'une voie bidirectionnelle 17, un duplexeur doit être utilisé pour garantir une isolation fréquentielle suffisante. L'isolation requise entre les deux canaux doit être égale à 90 dB. Cette exigence est satisfaite jusqu'à présent par utilisation de duplexeurs à cavité métallique.

Une caractéristique essentielle de l'invention réside dans le remplacement des duplexeurs de ce type, qui sont lourds et encombrants, par une architecture comprenant un filtre EX, un filtre RX et un dispositif de séparation supplémentaire EX/RX. Cette architecture permet d'utiliser des filtres passe-bande ayant des isolations plus faibles et donc des technologies de bas coût et de faible volume, comme par exemple les filtres à ondes de surface connus sous la dénomination SAW, et des filtres en technologie microbande appelés strip-lines. L'isolation typique produite par ces filtres est d'environ 40 à 60 dB. Le dispositif de séparation supplémentaire doit donc avoir une isolation supérieure ou égale à 30 dB. Selon l'invention, cette isolation supplémentaire pourrait être réalisée avantageusement par l'antenne 15 elle-même si cette antenne est une antenne à double polarisation telle qu'une antenne à polarisation linéaire verticale et horizontale, chaque polarisation étant attribuée à un des deux canaux à séparer.

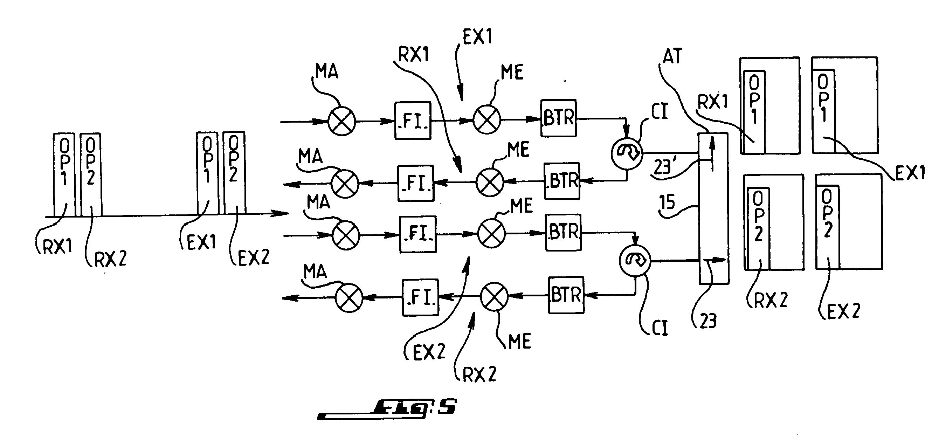

La figure 3 illustre schématiquement un tel ensemble de séparation. Le canal d'émission EX est muni d'un filtre passe-bande de bas coût et de faible encombrement 20 et le canal de réception RX est muni d'un filtre passe-bande correspondant 22. L'antenne à double polarisation 15 est montée dans les deux canaux EX et RX, une polarisation matérialisée par la flèche 23 étant attribuée à la voie EX tandis que l'autre polarisation symbolisée par la flèche 23' est associée à la voie RX.

La figure 4 illustre une architecture de filtrage selon l'invention, utilisable dans le cas d'application déjà mentionnée plus haut, dans lequel une liaison bidirectionnelle 17 comporte deux voies, à savoir une voie principale et une voie diversité, chaque voie comportant un canal d'émission EX et un canal de réception RX.

Au lieu d'utiliser deux antennes de bipolarisation, c'est-à-dire à deux polarisations, chacune pour les canaux EX et RX d'une voie, l'invention propose par la figure 4 une solution qui ne nécessite qu'une antenne de bipolarisation 15, un circulateur 24 et deux filtres 20, 22 pour une voie, par exemple une voie appelée voie principale comportant les canaux EX1, RX1 et un circulateur 24' et deux filtres 20', 22' pour la seconde voie connue sous le terme voie diversité, un filtre étant disposé dans chacun des canaux EX2 et RX2. L'invention permet ainsi de transmettre directement sur une même bande de fréquence les voies principales EX1 et RX1 et les voies diversité EX2 et RX2 du fait qu'elles sont de polarisations différentes.

Etant donné que chaque circulateur apporte une isolation de 30 dB, on obtient une isolation EX1/RX1 ou EX2/RX2 de 70-90 dB, à savoir une isolation de 40-60 dB fournie par les filtres 20 et 22 et 20' et 22' et une isolation de 30 dB supplémentaire fournie par le circulateur 24, 24' respectif. L'isolation EX1/EX2 ou RX1/RX2 est de 30 dB, c'est-à-dire l'isolation due aux deux polarisations de l'antenne. L'isolation EX1/RX2 ou EX2/RX1 est de 100-120 dB, c'est-à-dire la somme des isolations produites par les filtres, le circulateur et l'antenne.

Selon une autre caractéristique essentielle de l'invention, l'architecture de filtrage selon l'invention, qui vient d'être décrite, permet, en combinaison avec l'utilisation d'un double changement de fréquence tel que décrit dans la demande de brevet internationale 2005/051017, de diminuer le nombre de duplexeurs nécessaires selon l'état de la technique.

La figure 5 illustre cette caractéristique avantageuse de l'invention pour un cas d'application impliquant l'utilisation de deux bandes de fréquence d'opérateur OP1, OP2 devant être transposé à une bande de transmission BTR, de fréquences supérieures aux fréquences des bandes d'opérateur. Il est à noter que le processus de transposition des bandes s'effectue dans le boîtier électronique 13 de la station de base.

La figure 5 montre un système de transposition fréquentielle des bandes ou voies de fréquences d'une pluralité d'opérateur, dans l'exemple représenté de deux voies d'opérateur OP1, OP2 dont chacune comporte un canal EX et un canal RX, à un niveau de bande de transmission BTR pouvant comprendre une ou plusieurs bandes, chacune pourvue de sous-bandes de réception des canaux EX et RX des voies d'opérateur.

Il ressort de la figure 5 que, dans le spectre de fréquence des voies d'opérateur, les canaux RX des opérateurs sont juxtaposés et ainsi groupés et les canaux EX également. Les canaux RX pourraient être placés dans une zone de fréquences comprises entre 1900 MHz et 1980 MHz tandis que les canaux EX dans une zone comprise entre 2100 et 2180 MHz. Une bande de transmission BTR pourrait s'étendre de 2400 MHz à 2483 MHz.

Le système de transposition fréquentielle selon la figure 5 comprend pour chaque canal RX, EX d'une voie d'opérateur un mélangeur MA d'abaissement de fréquences à une fréquence intermédiaire et un mélangeur ME d'élévation des fréquences du niveau de fréquence intermédiaire au niveau de bande de transmission BTR. Dans chaque canal un filtre FI de fréquence intermédiaire est disposé entre un mélangeur d'abaissement MA et un mélangeur d'élévation ME.

Les bandes de fréquence des canaux EX et RX des opérateurs peuvent être les mêmes, par exemple de 10 MHz pour une fréquence intermédiaire central de 100 MHz ou être différentes. Le choix des filtres FI sera fait en conséquence. Les mélangeurs comportent des oscillateurs locaux choisis en fonction des transpositions fréquentielles qui doivent être exécutées.

Comme l'illustre la figure 4, le système de transposition fréquentiel selon l'invention doit assurer une séparation des canaux EX et RX de chaque voie à l'aide de deux filtres tels que les filtres 20 et 22 et d'un circulateur CI tel que le circulateur 24. Comme du côté des voies d'opérateur, les canaux RX et EX sont également groupés par juxtaposition respective au niveau des bandes de transmission BTR. En raison des transpositions fréquentielles de chaque canal RX et EX à l'aide de deux mélangeurs et donc de deux oscillateurs locaux et d'un filtre intermédiaire FI, les canaux peuvent être placés dans les sous-bandes appropriées d'une bande de transmission BTR. Mais, conformément à la figure 4, les canaux EX et RX doivent être séparés fréquentiellement, à l'aide de deux filtres passe-bande. La largeur de la bande passante de chaque filtre est choisie pour pouvoir contenir l'ensemble des canaux RX ou EX. Par conséquent, seulement deux types de filtres sont nécessaires au niveau d'une bande de transmission BRT. Le nombre de types de filtres FI par contre dépend du nombre des largeurs de bande différentes des canaux EX et RX des bandes d'opérateurs.

A titre d'exemple, dans le cas de trois bandes d'opérateur et de quatre largeurs de bandes possibles, le système de transposition fréquentielle selon la figure 5 ne nécessite que six types de filtres, quatre types de filtres de fréquence intermédiaire et deux types de filtres du côté des bandes de transmission BTR. En comparaison, une conception de systèmes de transposition sans abaissement a une fréquence intermédiaire, c'est-à-dire n'utilisant que des mélangeurs de transposition directe du niveau des voies d'opérateur au niveau de fréquence plus élevé des bandes de transmission BTR nécessiterait, dans ce cas de conception, 24 types de filtres.

Il est à noter que cette dernière conception peut mener au développement de filtres qui sont techniquement difficiles à réaliser du fait qu'il doit s'agir de filtres de bande d'une sélectivité inférieure à 1% par rapport à la fréquence centrale avec des fortes réjections. Dans le cadre de la conception illustrée à la figure 5, dans le cas de filtres intermédiaires FI d'une fréquence centrale de 100 MHz et d'une largeur de 10 MHz, Ces filtres FI n'ont que des bandes inférieures à 10% de la fréquence centrale et peuvent donc être des filtres "standards".

Le système de transmission selon l'invention, représenté à la figure 5, basé sur une transposition fréquentielle passant par une fréquence intermédiaire permet le choix de la fréquence d'opérateur par le choix de l'oscillateur local du mélangeur d'abaissement et de la fréquence BTR par le choix de l'oscillateur local du mélangeur d'élévation. Un seul type de filtre est nécessaire au niveau des bandes de transmission. Autrement dit, l'invention accomplit un filtrage en sous-bande par le filtre de fréquence intermédiaire.

En revenant à nouveau à la figure 5, on constate que les canaux RX et TX de l'opérateur OP1 sont mis sur une polarisation de l'antenne AT et les canaux RX et EX de l'opérateur OP2 sur l'autre polarisation de l'antenne, les canaux RX étant dans la même bande de fréquence, mais séparés par le fait qu'ils sont sur des polarisations différentes.

Dans le cas de trois ou quatre opérateurs, les canaux RX seront placés dans les sous-bandes appropriées de la bande de transmission BTR et les canaux EX également. Dans le spectre de fréquence de l'antenne, les canaux des opérateurs supplémentaires seraient alors placés à côté des canaux représentés, les canaux du troisième opérateur par exemple à côté des canaux RX1 et EX1 et les canaux d'un quatrième opérateur éventuel alors à côté des canaux RX2 et EX2. De toute manière, l'utilisation des deux polarisations de l'antenne apporte une réduction de la largeur du spectre de fréquence de l'antenne.

## Revendications

1. Système de transmission de données sans fil entre une station de base et une antenne-relais d'un réseau de téléphonie mobile, du type comprenant au moins une liaison bidirectionnelle qui comporte au moins une voie pourvue d'au moins un canal d'émission et d'un canal de réception de signaux électriques et des moyens d'isolation fréquentielle de deux canaux à séparer fréquentiellement, la liaison comprenant associés à l'antenne relais et à la station de base respectivement un dispositif électronique pourvu d'une antenne, **caractérisé en ce qu'**une liaison (17) comporte pour la séparation des canaux deux filtres (20, 22) ayant une isolation inférieure à l'isolation prédéterminée totale et **en ce que** les antennes (15) sont des antennes à double polarisation, chaque polarisation étant attribuée à un des deux canaux et **en ce que** l'isolation fournie par les filtres (20, 22) et l'antenne (15) s'additionnent pour l'obtention de l'isolation prédéterminée totale.

2. Système selon la revendication 1, **caractérisé en ce qu'**un filtre précité (20, 22) est un filtre de faible coût et de faible encombrement, tel qu'un filtre du type à ondes de surface ou du type à microbandes.

3. Système selon l'une des revendications 1 ou 2, du type comportant un canal d'émission et un canal de réception, **caractérisé en ce que** le canal d'émission (EX) est mis sur une polarisation de l'antenne (15) et le canal de réception (RX) sur l'autre polarisation.

4. Système selon l'une des revendications 1 ou 2, **caractérisé en ce que**, pour une liaison directionnelle (17) comprenant deux voies, chacune comportant un canal d'émission EX et un canal de réception RX, une polarisation de l'antenne (15) est attribuée aux deux canaux d'une voie et l'autre polarisation aux deux canaux de l'autre voie, un organe séparateur de canaux supplémentaires étant prévu dans chaque voie.

5. Système selon la revendication 4, **caractérisé en ce que** l'organe séparateur est un circulateur.

6. Système selon l'une des revendications 4 ou 5, **caractérisé en ce que** dans un système à plusieurs bandes d'opérateur (OP1, OP2) devant être transposés à au moins une bande de transmission (BTR) de fréquence supérieure, le dispositif de transposition fréquentielle comporte un étage de fréquence intermédiaire pourvu pour chaque canal d'un filtre intermédiaire (FI) et un mélangeur (MA) d'abaissement de fréquence et un mélangeur (ME) d'élévation des fréquences et au niveau de la bande de transmission (BTR) une paire de filtres précitée par les canaux (Ex) et les canaux (RX) et un circulateur.
